# EUROPÄISCHE PATENTSCHRIFT

(11) **EP 1 207 180 B1**
(45) Veröffentlichungstag und Bekanntmachung des Hinweises auf die Patenterteilung: **22.06.2005**
(21) Anmeldenummer: 01125476.0
(22) Anmeldetag: 06.11.2001
(51) Int. Cl.: C08K 3/34

(54) **Verwendung einer Giessmasse zur Herstellung von Sanitärformteilen**
Use of a casting composition to prepare sanitary parts
Utilisation des compositions pour la fonderie des elements sanitaires

(30) Priorität: 15.11.2000 DE 10056725
(43) Veröffentlichungstag der Anmeldung: 22.05.2002
(73) Patentinhaber: BLANCO GmbH + Co KG, 75038 Oberderdingen (DE)
(72) Erfinder: Grathwohl, Stefanie, 75038 Oberderdingen (DE); Harke, Stefan, Dr., 74889 Sinsheim-Rohrbach (DE); Heck, Thomas, 74858 Aglasterhausen (DE)
(74) Vertreter: HOEGER, STELLRECHT & PARTNER Patentanwälte

(56) Entgegenhaltungen:
- EP-A- 0 345 581
- EP-A- 1 022 295
- EP-A- 1 043 355
- QUARZWERKE FRECHEN: "sicherheitsblatt gemä$ 91/1555 EWG" 9. Juli 2001 (2001-07-09) , QUARZWERKE FRECHEN , FRECHEN XP002190462 * Absatz [002.] *

## Beschreibung

Die Erfindung betrifft die Verwendung einer aushärtbaren Gießmasse zum Gießen von Sanitärformteilen, sowie hieraus hergestellte Sanitärformteile.

Solche Gießmassen beinhalten in der Regel einen Sirup mit einem polymerisierbaren Monomeren und einem anorganischen Füllstoff zur Verbesserung der Oberflächeneigenschaften sowie auch der mechanischen Eigenschaften des Formteils selbst.

Gießmassen dieser Art sind beispielsweise aus dem deutschen Patent DE 24 49 696 oder auch aus den europäischen Patentanmeldungen EP-A 0 491 170, EP-A 0 218 866, EP-A 0 361 101 oder EP-A 0 321 193 bekannt.

In der EP 0 345 581 A2 sind füllstoffhaltige polymerisierbare Massen auf der Basis von Monomeren und faserförmigen und nicht-faserförmigen anorganischen Füllstoffen beschrieben. Diese polymerisierbaren Massen umfassen
a) 15 bis 60 Gew.-% Monomere mit radikalisch polymerisierbaren Doppelbindungen, b) 8 bis 40 Gew.-% faserförmige anorganische Füllstoffe mit einer mittleren Faserlänge von 10 nm bis 300 µm und mit einem Verhältnis von Länge zu Durchmesser von 2:1 bis 300:1, c) 15 bis 60 Gew.-% nicht-faserförmige anorganische Füllstoffe mit einer mittleren Teilchengröße von 10 nm bis 200 µm und
d) 0 bis 10 Gew.-% Hilfsmittel, wobei die Summe der einzelnen Komponenten a) bis d) 100 Gew.-% ergibt.

Insbesondere bei aushärtbaren Gießmassen, bei denen der Sirup auf Monomeren vom Acrylattyp basiert, ist das Problem des Schrumpfens beim Aushärten zu beachten, und hier sind in der Literatur zahllose Lösungsansätze bekannt.

Da viele der typischerweise mit den erfindungsgemäßen Gießmassen herzustellenden Formteile eine sogenannte Sicht- und eine Rückseite aufweisen, wobei nur die Sichtseite im eingebauten Zustand des Formteils sichtbar bleibt und die Rückseite verdeckt ist und damit optisch von geringerer Qualität sein kann als die Sichtseite, wurde der Polymerisationsprozeß auf der Sichtseite gestartet, so daß diese glatt und optisch ansprechend erhalten wird und abnehmendes Volumen von der Rückseite her nachgeliefert werden kann. Dies bedingt, daß die Gießmasse, die ursprünglich die gesamte Gießform ausgefüllt hat, im Endzustand des Polymerisationsschrittes nicht mehr überall an der Formrückseite anliegt und die Rückseite damit mehr oder weniger große Unebenheiten aufweist.

Weiterhin ist zu berücksichtigen, daß der Polymerisationsprozeß von Acrylatmonomeren erheblich exotherm verläuft, so daß die Temperaturführung beziehungsweise Temperaturkontrolle von großer Bedeutung ist. Dies kann letztlich nur über eine Temperierung der Formoberfläche bewerkstelligt werden.

Sobald jedoch der Kontakt der Gießmasse mit der Formoberfläche der Formenrückseite entfällt, fehlt eine ausreichende Wärmeabführung, so daß es dort mindestens zu lokalen Überhitzungen kommen kann. Dies macht sich in einer Art Blasenbildung (Auskocher genannt) auf der Formenrückseite bemerkbar, die zwar für die Qualität des Produkts als solches häufig unbeachtlich sein kann, jedoch im Bereich des Spülenbodens, insbesondere im Bereich des Auslaufes störend ist, da unebene Flächen an der Rückseite im Bereich des Auslaufs dazu führen, daß dieser Rückseitenbereich nachbearbeitet werden muß, um glatte Anlageflächen für Dichtungselemente der Ablaufgarnitur zu schaffen.

Aufgabe der vorliegenden Erfindung ist es, die Verwendung eine Gießmasse zur herstellung um Sanitärformteilen vorzuschlagen, mit der das Problem der sogenannten Auskocher an der Formteilrückseite zurückgedrängt, wenn nicht gar vermieden werden kann.

Diese Aufgabe wird erfindungsgemäß durch die Verwendung einer aushärtbaren Gießmasse zum Gießen von Sanitärformteilen gelöst, die einen ein Acrylatmonomer umfassenden Sirup, welcher gegebenenfalls einen Anteil an einem Acrylatpräpolymeren umfaßt, Wollastonit als Additiv mit einem Anteil von 1 bis 12 Gewichtsprozent, bezogen auf die Gießmasse, und einen granularen anorganischen Füllstoff, welcher von Wollastonit verschieden ist, umfaßt, wobei der Gesamtgehalt von granularem anorganischem Füllstoff und Wollastonit-Additiv 50 bis 85 Gewichtsprozent beträgt.

Das Additiv Wollastonit ist zwar in der Literatur als einer von vielen als sogenannter Füllstoff für Kunststoffe bekannt und insbesondere dafür bekannt, daß er zu einer Verstärkung der Kunststoffmaterialien führt, das heißt insbesondere zur Verbesserung von deren mechanischen Eigenschaften.

Wollastonit ist diesbezüglich vergleichbar mit Glasfaserverstärkung, weil der Wollastonit von Haus aus eine Art Nadelstruktur aufweist.

Erstaunlicherweise lassen sich nun Anteile von Wollastonit im Bereich von 1 bis 12 Gewichtsprozent dazu nutzen, um Auskocher auf der Rückseite der Formteile sehr stark zurückzudrängen, wenn nicht gar komplett zu vermeiden.

Der Effekt des Zurückdrängens von Auskochern auf der Rückseite wird merklich bei einem Anteil von einem Gewichtsprozent. Oberhalb von 12 Gewichtsprozent stellen sich diesbezüglich keine weiteren Verbesserungen ein. Im Prinzip wären höhere Wollastonit-Anteile in der Gießmasse vorstellbar, jedoch beginnt spätestens ab einem Gewichtsanteil von 15 % die Füllzeit für die Form sehr stark anzusteigen aufgrund der durch den höheren Wollastonit-Anteil verminderten Fließfähigkeit der Gießmasse.

Außerdem wird erstaunlicherweise bei Überschreiten der vorgenannten Grenze von 12 % eine schlechtere Schlagzähigkeit des Materials sowie auch eine schlechtere Oberflächenqualität auf der Sichtseite in Form von Glanzstellen beobachtet, das heißt Stellen, die gegenüber anderen eher matt scheinenden (normalen) Oberflächenbereichen glänzend aussehen, und solche Formteile sind unverkäuflich. Darüber hinaus wäre schließlich auch der Preis des Wollastonits zu berücksichtigen, der höher liegt als der üblicher anorganischer Füllstoffe.

Der verwendete anorganische Füllstoff, der von Wollastonit verschieden ist, ist ein granularer Füllstoff, insbesondere einer mit einer ungebrochenen Kornform. Die Verwendung von granularen Füllstoffen läßt höhere Anteile des Wollastonit-Additivs in der Gießmasse zu, ohne daß übermäßig erhöhte Viskositätswerte für die Gießmasse zu verzeichnen sind.

Bevorzugte granulare anorganische Füllstoffe sind Cristobalit, Aluminiumoxidtrihydrat (ATH) sowie Quarzsand. Die Partikel des anorganischen Füllstoffes können unbeschichtet oder aber auch zum Erzielen besonderer Farbeffekte mit Pigmenten beschichtet zum Einsatz gelangen.

Die besten Ergebnisse mit Wollastonit-Anteilen bezüglich der Vermeidung von Auskochern einerseits und der Verbesserung der mechanischen Eigenschaften beziehungsweise des Aussehens der Oberfläche werden im Bereich von 3 bis 10 Gewichtsprozent erzielt.

Das Wollastonit-Additiv-Material selbst wird bevorzugt zu mindestens 50 Gewichtsprozent aus einem nadelförmigen Wollastonit-Material bestehen, dessen Längen-/Durchmesserverhältnis im Bereich von 5:1 bis 35:1 liegt.

Die Erfindung betrifft schließlich Formkörper, die unter Verwendung der erfindungsgemäßen aushärtbaren Gießmasse wie zuvor beschrieben hergestellt sind.

Beachtenswert ist, daß durch Verwendung der erfindungsgemäßen Gießmasse Formkörper hergestellt werden können, die eine geringere Dicke aufweisen als die Formkörper entsprechend dem Stand der Technik und trotzdem dieselben mechanischen Eigenschaften aufweisen. Darüber hinaus kann mit der erfindungsgemäßen aushärtbaren Gießmasse durch entsprechende Führung des Polymerisationsprozesses sichergestellt werden, daß ein Restmonomergehalt von kleiner 0,5 insbesondere auch kleiner 0,3 % eingehalten werden kann.

Diese und weitere Vorteile der Erfindung werden im folgenden anhand von Beispielen noch näher erläutert.

Obwohl für die vorliegende Erfindung der Sirup in mehrfacher Hinsicht variieren kann und keinesfalls auf ein Sirup, in dem der Monomeranteil mit einem Präpolymeranteil in Lösung vorliegt, zurückgegriffen werden muß, wird im Folgenden der Einfachheit halber auf einen solchen Sirup standardmäßig zurückgegriffen. Der erfindungsgemäße Effekt zeigt sich auch in Fällen, in denen PMMA-freie Sirupe verwendet werden und zur Viskositätsbeeinflussung beispielsweise organische Kunststoffe in granularer Form eingesetzt werden, welche in der Lage sind, Monomer quellend aufzunehmen und somit der Viskositätseinstellung der Gießmasse dienen können.

Auch bei den anorganischen Füllstoffen läßt sich eine Vielzahl von Materialien verwenden, ohne den erfindungsgemäßen Effekt der Zurückdrängung der Auskocher zu beeinträchtigen. Der Übersichtlichkeit halber wird in den Beispielen immer auf denselben Füllstofftyp zurückgegriffen.

### Herstellung der Sirupmischung:

22 kg PMMA (Type MH 254 der Firma Ineus, Großbritannien) werden in 78 kg Methylmethacrylat (MMA) gelöst. Danach werden 0,1 kg Stearinsäure (Firma Merck, Deutschland) und 2,0 kg Trimethylolpropantrimethacrylat (Firma Röhm, Darmstadt, Deutschland) zugegeben. Der so erhaltene Sirup wird mit zusätzlichem MMA auf eine Viskosität von 230 mPa*s eingestellt. Danach werden 150 g Perkadox 16 (Firma Akzo), 1,2 kg Laurox (Firma Akzo, Deutschland) und 500 g tert.-Butylperbenzoat (Firma Peroxid-Chemie, Deutschland) zugegeben.

Dieser Sirup wird in allen der folgenden Beispiele und Vergleichsbeispiele gleichermaßen eingesetzt.

### Beispiel 1:

Zu 27 kg der Sirupmischung werden in einem Druckbehälter 32 kg Füllstoff der Type Granucol 20/9 (silanisiert, mittlere Korngröße ca. 0,4 mm, Firma Dorfner, Deutschland) und 35 kg der Type Granucol 20/8 (silanisiert, mittlere Korngröße ca. 0,6 mm, Firma Dorfner, Deutschland) gegeben.

Danach werden 6 kg Wollastonit des Typs VP 939 MSST der Firma Quarzwerke Frechen (Deutschland) zugegeben. Die so erhaltene Gießmasse wird entgast und danach wird die Gießmasse in einen Formenhohlkörper gefüllt und bei einer Temperatur von 100°C zu einer Küchenspüle auspolymerisiert. Der Beckenboden der Spüle wies eine Stärke von 8 mm auf. Die Analysenergebnisse sind wie folgt:

| | |
|---|---|
| Kugelfalltest | bei 80 cm Fallhöhe kein Bruch, |
| | bei 120 cm Fallhöhe kein Bruch |
| Restmonomerengehalt | 0,210 Gewichtsprozent |
| Rückseitenbeurteilung | keine Auskocher vorhanden. |

Diese Rückseitenbeurteilung bedeutet, daß die Ablaufgarnitur für den Ablauf des Spülbeckens montiert werden kann, ohne daß eine Rückseitenbearbeitung der Spüle im Auslaufbereich erfolgen müßte.

### Beispiel 2:

Zu 27 kg der Sirupmischung werden in einem Druckbehälter 30 kg Füllstoff der Type Granucol 20/9 (silanisiert, mittlere Korngröße 0,3 mm, Firma Dorfner, Deutschland) und 33 kg Füllstoff der Type Granucol 20/8 (silanisiert, mittlere Korngröße 0,6 mm, Firma Dorfner, Deutschland) zugegeben. Danach werden 10 kg Wollastonit der Type VP 939 MSST zugegeben. Die so erhaltene Gießmasse wird entgast und danach wird die Gießmasse in einen Formenhohlkörper gefüllt, wobei bei einer Temperatur von 100°C eine Küchenspüle auspolymerisiert wird. Der Beckenboden der Spüle wies eine Stärke von 8 mm auf. Die Analysenergebnisse sind wie folgt:

| | |
|---|---|
| Kugelfalltest | bei 80 cm Fallhöhe kein Bruch, |
| | bei 120 cm Fallhöhe kein Bruch |
| Restmonomerengehalt | 0,240 Gewichtsprozent |
| Rückseitenbeurteilung | keine Auskocher vorhanden. |

### Beispiel 3:

27 kg der Sirupmischung werden in einem Druckbehälter 33,5 kg Füllstoff der Type Granucol 20/9 (silanisiert, mittlere Korngröße 0,3 mm, Firma Dorfner, Deutschland) und 36,5 kg Füllstoff der Type Granucol 20/8 (silanisiert, mittlere Korngröße 0,6 mm, Fa. Dorfner, Deutschland) gegeben. Danach werden 3 kg Wollastonit des Typs VP 939 MSST zugegeben. Diese erhaltene Gießmasse wird entgast, danach wird die Gießmasse in einen Formenhohlkörper gefüllt und bei einer Temperatur von 100°C zu einer Küchenspüle auspolymerisiert. Der Bekkenboden der Spüle wies eine Stärke von 8 mm auf.

Die Analysenergebnisse sind wie folgt:

| | |
|---|---|
| Kugelfalltest | bei 80 cm Fallhöhe kein Bruch, |
| | bei 120 cm Fallhöhe kein Bruch |
| Restmonomerengehalt | 0,250 Gewichtsprozent |
| Rückseitenbeurteilung | keine Auskocher vorhanden |

### Beispiel 4:

Zu 27 kg der Sirupmischung werden in einem Druckbehälter 32 kg Füllstoff der Type Granucol 20/9 und 35 kg Füllstoff der Type Granucol 20/8 gegeben. Danach werden 6 kg Wollastonit der Type VP 939 MSST zugegeben. Die so erhaltene Gießmasse wird entgast, danach wird die Gießmasse in einen Formenhohlkörper gefüllt und bei einer Temperatur von 100°C zu einer Küchenspüle auspolymerisiert. Der Beckenboden der Spüle wies eine Stärke von 11 mm auf. Die Analysenergebnisse sind wie folgt:

| | |
|---|---|
| Kugelfalltest | bei 80 cm Fallhöhe kein Bruch, |
| | bei 120 cm Fallhöhe kein Bruch |
| Restmonomerengehalt | 0,240 Gewichtsprozent |
| Rückseitenbeurteilung | keine Auskocher vorhanden |

### Vergleichsbeispiel 1:

Zu 27 kg der Sirupmischung werden in einem Druckbehälter 35 kg Füllstoff der Type Granucol 20/9 und 38 kg Füllstoff der Type Granucol 20/8 gegeben. Die so erhaltene Gießmasse wird entgast und danach wird die Gießmasse in einen Formenhohlkörper gefüllt und bei einer Temperatur von 100°C zu einer Küchenspüle auspolymerisiert. Der Beckenboden der Spüle wies eine Stärke von 11 mm auf.

Die Analysenergebnisse sind wie folgt:

| | |
|---|---|
| Kugelfalltest | bei 80 cm Fallhöhe kein Bruch, |
| | bei 120 cm Fallhöhe Bruch |
| Restmonomerengehalt | 0,490 Gewichtsprozent |
| Rückseitenbeurteilung | starke Auskocher vorhanden mit der Folge, daß der Auslauf undicht ist, da keine glatte Anlagefläche für die Ablaufgarnitur vorhanden ist; dieses Problem kann nur mit einer Nachbearbeitung behoben werden |

### Vergleichsbeispiel 2:

Zu 27 kg der Sirupmischung werden in einem Druckbehälter 35 kg Füllstoff der Type Granucol 20/9 und 38 kg Füllstoff der Type Granucol 20/8 gegeben. Die so erhaltene Gießmasse wird entgast und danach wird die Gießmasse in einen Formenhohlkörper gefüllt und bei einer Temperatur von 100°C zu einer Küchenspüle auspolymerisiert. Der Beckenboden der Spüle wies eine Stärke von 8 mm auf. Die Analysenergebnisse sind wie folgt:

| | |
|---|---|
| Kugelfalltest | 80 cm Fallhöhe führt zu Bruch |
| Restmonomerengehalt | 0,40 Gewichtsprozent |
| Rückseitenbeurteilung | starke Auskocher vorhanden |

### Vergleichsbeispiel 3:

Zu 27 kg der Sirupmischung werden in einem Druckbehälter 34,75 kg Füllstoff der Type Granucol 20/9 und 37,75 kg Füllstoff der Type Granucol 20/8 zugegeben. Zusätzlich werden noch 500 g einer silanisierten Glasfasertype (Famix 1.100 der Firma Osthoff-Petrasch, Deutschland) in die Gießmasse eingerührt. Die so erhaltene Gießmasse wird entgast, danach wird die Gießmasse in einen Formenhohlkörper gefüllt und bei einer Temperatur von 100°C zu einer Küchenspüle auspolymerisiert. Der Beckenboden der Spüle wies eine Stärke von 8 mm auf. Die Analysenergebnisse sind wie folgt:

| | |
|---|---|
| Kugelfalltest | bei 80 cm Fallhöhe kein Bruch, |
| | bei 120 cm Fallhöhe kein Bruch |
| Restmonomerengehalt | 0,210 Gewichtsprozent |
| Rückseitenbeurteilung | keine Auskocher vorhanden |
| Sichtseitenbeurteilung | starke Glanzstellen; das Formteil ist als Ausschuß zu bewerten |

### Vergleichsbeispiel 4:

Zu 27 kg der Sirupmischung werden in einem Druckbehälter 34,5 kg Füllstoff der Type Granucol 20/9 und 37 kg Füllstoff der Type Granucol 20/8 zugegeben. Zusätzlich werden noch 1.000 g einer silanisierten Glasfasertype (Famix 1.100 der Firma Osthoff-Petrasch, Deutschland) in die Gießmasse eingerührt. Die hierbei erhaltene Gießmasse ist allerdings so hoch viskos, daß ein Befüllen des Formenhohlkörpers nicht mehr möglich ist.

Die zuvor beschriebenen Ergebnisse betreffend des Kugelfalltestes wurden nach DIN EN 1220 durchgeführt:

Ein Kunststoffrohr mit einem Durchmesser von 38,5 mm wird im Abstand von 80 und 120 cm vom Rohrunterrand mittig mit einer Querbohrung versehen. Durch diese Bohrungen wird je nach Fallhöhe ein Metallstift als Auflager für eine Kugel gesteckt. Dann wird eine Stahlkugel mit einem Gewicht von 200 ± 5 g in das Rohr gegeben. Nach Aufsetzen des Rohres auf den Beckenboden wird der Metallstift herausgezogen, so daß die Kugel durch das Rohr auf den Beckenboden fällt und auf diesen auftrifft. Danach wird die Spüle von der Sichtseite und der Rückseite her begutachtet. Als Bruch ist auch zu werten, wenn auf der Rückseite eine sichtbare Schädigung aufgetreten ist.

### Restmonomerengehalt:

Ca. 10 g einer Probe der Spüle aus dem Beckenboden wird mit einem handelsüblichen Hammer in Bruchstücke zerschlagen bis auf eine Bruchstückgröße von ca 3 bis 6 mm. Ein Gramm dieser Bruchstücke wird in einen 50 ml Meßkolben überführt. Dann wird mit 25 ml Methylenchlorid aufgefüllt und auf einem Laborschüttler während 24 Stunden geschüttelt. Die überstehende Lösung wird in üblicher Weise mit Hilfe eines Gaschromatographen auf den MMA-Gehalt hin analysiert. Der Restmonomerengehalt wird bestimmt und in Gewichtsprozent bezogen auf die Einwaage von einem Gramm der Bruchstücke angegeben.

Die Beispiele und Vergleichsbeispiele zeigen den erfindungsgemäß erzielten Effekt auf die Ausbildung der Rückseite der Formteile, wenn erfindungsgemäß Wollastonit als Additiv in der Gießmasse eingesetzt wird.

Die Vergleichsbeispiele 3 und 4 zeigen, daß das Wollastonit-Additiv nicht durch andere Additive, die ebenfalls verstärkend wirken, ersetzt werden kann. Glasfasern zeigen zwar in Vergleichsbeispiel 3, daß auch dort das Problem der Auskocher zurückgedrängt werden kann, jedoch erhält man auf der Sichtseite unerwünschte Glanzstellen, die das Formteil unverkäuflich machen. Zudem findet man unerwarteterweise bei den Formteilen, die aus einer erfindungsgemäßen Gießmasse hergestellt sind, einen deutlich reduzierten Restmonomergehalt, was den unangenehmen Neugeruch der Formteile zu einem erheblichen Teil zurückdrängt.

## Patentansprüche

1. Verwendung einer aushärtbaren Gießmasse zum Gießen von Sanitärformkörpern, wobei die Gießmasse umfaßt:
einen ein Acrylatmonomer umfassenden Sirup, welcher gegebenenfalls einen Anteil an einem Acrylatpräpolymeren umfaßt,
Wollastonit als Additiv mit einem Anteil von 1 bis 12 Gewichtsprozent, bezogen auf die Gießmasse,
und einen granularen anorganischen Füllstoff, welcher von Wollastonit verschieden ist, wobei der Gesamtgehalt von granularem anorganischem Füllstoff und Wollastonit-Additiv 50 bis 85 Gewichtsprozent beträgt.

2. Verwendung nach Anspruch 1, **dadurch gekennzeichnet, daß** der granulare anorganische Füllstoff ausgewählt ist aus Cristobalit, Aluminiumoxidtrihydrat und Quarzsand.

3. Verwendung nach einem der Ansprüche 1 oder 2, **dadurch gekennzeichnet, daß** das Wollastonit-Additiv einen Anteil an der Gießmasse von 3 bis 10 Gewichtsprozent aufweist.

4. Verwendung nach einem der Ansprüche 1 bis 3, **dadurch gekennzeichnet, daß** das Wollastonit-Additiv zu einem Anteil von mindestens 50 Gewichtsprozent aus einem nadelförmigen Wollastonitmaterial mit einem Längen/Durchmesserverhältnis im Bereich von 5:1 bis 35:1 besteht.

5. Sanitärformkörper, hergestellt unter Verwendung eines aushärtbaren Gießmasse wie in den Ansprüchen 1 bis 4.

6. Formkörper nach Anspruch 5, **dadurch gekennzeichnet, daß** der Formkörper einen Restmonomergehalt von kleiner 0,5 Gewichtsprozent aufweist.

## Claims

1. Use of a curable casting composition for casting shaped sanitary articles, wherein the casting composition comprises:
a syrup comprising an acrylate monomer, which syrup optionally comprises a proportion of an acrylate prepolymer,
wollastonite as an additive in a proportion of 1 to 12 percent by weight, relative to the casting composition,
and a granular inorganic filler other than wollastonite, wherein the overall content of granular inorganic filler and wollastonite additive is 50 to 85 percent by weight.

2. Use according to Claim 1, **characterized in that** the granular inorganic filler is selected from cristobalite, alumina trihydrate and quartz sand.

3. Use according to either of Claims 1 and 2, **characterized in that** the wollastonite additive is present in the casting composition in a proportion of 3 to 10 percent by weight.

4. Use according to any of Claims 1 to 3, **characterized in that** the wollastonite additive consists, in a proportion of at least 50 percent by weight, of a needle-like wollastonite material having a length/diameter ratio in the range from 5:1 to 35: 1.

5. Shaped sanitary article, manufactured using a curable casting composition according to Claims 1 to 4.

6. Shaped article according to Claim 5, **characterized in that** the shaped article has a residual monomer content of less than 0.5 percent by weight.

## Revendications

1. Utilisation d'une composition de coulée durcissable pour la coulée d'éléments sanitaires, où la composition de coulée comprend :
un sirop comprenant un monomère acrylate, qui comprend le cas échéant, une proportion d'un prépolymère acrylate,
la wollastonite comme additif, en une proportion de 1 à 12% en poids, sur base de la composition de coulée,
et une charge inorganique granulaire, qui est différente de la wollastonite, où la teneur totale en charge inorganique granulaire et en additif wollastonite se situe dans l'intervalle allant de 50 à 85% en poids.

2. Utilisation selon la revendication 1, **caractérisée en ce que** la charge inorganique granulaire est choisie parmi la cristobalite, l'oxyde d'aluminium trihydraté et le sable siliceux.

3. Utilisation selon l'une quelconque des revendications 1 ou 2, **caractérisée en ce que** l'additif wollastonite présente une proportion de 3 à 10% en poids de la composition de coulée.

4. Utilisation selon l'une quelconque des revendications 1 à 3, **caractérisée en ce que** l'additif wollastonite consiste en une proportion d'au moins 50% en poids, en un matériau wollastonite de type aiguilles avec un rapport longueur/diamètre situé dans l'intervalle allant de 5:1 à 35:1.

5. Elément sanitaire, préparé en utilisant une composition de coulée durcissable selon les revendications 1 à 4.

6. Article moulé selon la revendication 5, **caractérisé en ce que** l'article moulé présente une teneur en monomère résiduel inférieure à 0,5% en poids.
